# FASCICULE DE BREVET EUROPEEN

(11) **EP 2 629 023 B1**
(45) Date de publication et mention de la délivrance du brevet: **20.04.2016**
(21) Numéro de dépôt: 13153862.1
(22) Date de dépôt: 04.02.2013
(51) Int. Cl.: F24F 5/00, F24F 12/00, F24D 17/00, F24D 17/02

(54) **Installation thermique et procédé assurant un conditionnement thermique d'un local et une production d'eau chaude sanitaire**
Thermische Anlage und thermische Konditionierung eines Raums sowie Erzeugung von sanitärem Warmwasser
Thermal plant and method providing thermal conditioning of premises and domestic hot water production

(30) Priorité: 14.02.2012 FR 1251364
(43) Date de publication de la demande: 21.08.2013
(73) Titulaire: COMMISSARIAT A L'ENERGIE ATOMIQUE ET AUX ENERGIES ALTERNATIVES, 75015 Paris (FR); Atlantic Climatisation et Ventilation, 69330 Meyzieu (FR)
(72) Inventeur: Paulus, Cédric, 73490 La Ravoire (FR); Benabdelmoumene, Nabil, 71300 Montceau les Mines (FR); Boudehenn, François, 07190 Saint Sauveur de Montagut (FR); Bramkamp, Uwe, 44470 Carquefou (FR); Demia, Laurent, 01120 Montluel (FR); Mondot, Michèle, 69006 Lyon (FR); Saisset, Luc, 38460 Villemoirieu (FR)
(74) Mandataire: Novaimo

(56) Documents cités:
- EP-A1- 1 731 846
- EP-A1- 2 306 107
- EP-A1- 2 312 227
- EP-A2- 0 134 015
- WO-A1-2009/000974
- DE-A1- 10 058 273
- DE-U1-202006 009 538
- FR-A1- 2 922 632

## Description

### Domaine technique de l'invention

L'invention concerne une installation thermique assurant un conditionnement thermique d'un local combiné à une production d'eau chaude sanitaire, notamment à destination du local. Cette installation a pour vocation de se présenter sous la forme d'un appareil compact multifonction. Le conditionnement thermique comprend un chauffage et/ou une ventilation et/ou un rafraîchissement du local.

L'invention a pour objet également un procédé de conditionnement thermique d'un local et de production d'eau chaude sanitaire.

### État de la technique

Le développement d'habitats de type à basse consommation d'énergie a pour conséquence de réduire fortement les besoins de chauffage alors que les besoins d'eau chaude sanitaire restent constants. L'implantation de ce type d'habitat dans des climats tempérés implique également parfois des besoins de rafraîchissement afin de maintenir une température convenable ou de confort indépendamment de la saison.

Pour satisfaire les besoins des habitats de type à basse consommation, des appareils compacts « multifonctions » ont été développé permettant de remplir sélectivement une ou plusieurs fonction(s) disponible(s) parmi une pluralité de fonctions que peut exécuter un seul et même appareil multifonction, notamment une fonction de chauffage du local, une fonction de production d'eau chaude sanitaire, une fonction de ventilation, une fonction de rafraîchissement du local.

Du fait des faibles besoins de chauffage, les appareils multifonctions sont classiquement équipés de générateurs de faible puissance. La puissance est donc limitée pour la production d'eau chaude sanitaire et un ballon de stockage est utilisé pour accumuler de l'énergie.

De nombreux appareils multifonctions sont disponibles sur le marché et peuvent se scinder en deux catégories suivant qu'ils permettent ou non d'exécuter la fonction de rafraîchissement du local.

Le document EP1731846 divulgue un appareil multifonction qui permet de combiner la fonction de production d'eau chaude sanitaire et la fonction de chauffage. Cet appareil appartient à la catégorie de ceux n'assurant pas de fonction de rafraîchissement. L'appareil est constitué d'un échangeur double flux équipé de ventilateurs pour extraire de l'air vicié de l'habitat et insuffler de l'air neuf dans l'habitat, tout en récupérant de l'énergie disponible dans l'air extrait. Une unique pompe à chaleur permet de produire l'énergie nécessaire au chauffage de l'habitat et à la production d'eau chaude sanitaire. La pompe à chaleur est composée d'un condenseur situé dans le ballon de stockage pour la production d'eau chaude sanitaire, ce condenseur étant placé en série avec un autre condenseur situé quant à lui sur le conduit d'air insufflé. Ces deux condenseurs sont également en série avec un troisième condenseur raccordé à une boucle d'eau pour réaliser un chauffage aéraulique. L'évaporateur de la pompe à chaleur est raccordé sur un circuit hydraulique qui puise des calories soit dans l'air extrait, soit dans une source géothermique. Cet appareil présente l'inconvénient de produire obligatoirement de l'eau chaude sanitaire lorsqu'il remplit sa fonction de chauffage, même en cas d'absence de besoin de production d'eau chaude sanitaire, du fait des deux condenseurs associés en série.

Afin de garantir des prestations de confort satisfaisantes d'autres appareils multifonctions sont connus pour assurer une production d'eau chaude sanitaire tout en réalisant un chauffage ou un rafraîchissement du local.

Le document EP2312227 divulgue une installation de ventilation mécanique contrôlée de type double flux thermodynamique réversible assurant une production d'eau chaude sanitaire. Cet appareil appartient à la catégorie de ceux assurant une fonction de rafraîchissement. L'appareil est composé d'une unique pompe à chaleur utilisant un circuit frigorifique spécifique, de deux ventilateurs permettant d'extraire et d'insuffler de l'air dans un habitat et d'un ballon de stockage pour l'eau chaude sanitaire. La récupération d'énergie de l'air extrait s'effectue non pas au moyen d'un récupérateur statique mais au moyen de la pompe à chaleur. Le circuit frigorifique est constitué d'un compresseur et d'un condenseur montés en série pour assurer la production d'eau chaude sanitaire via un circuit secondaire. Le circuit primaire comprend un second condenseur à air, raccordé en série avec le premier condenseur et couplé thermiquement à la conduite d'air insufflé. Le second condenseur permet de réaliser le chauffage de l'habitat via l'air insufflé. Le circuit frigorifique comprend une branche de dérivation ou « by-pass » en parallèle du deuxième condenseur, permettant d'assurer que la fonction de production d'eau chaude sanitaire sans la fonction de chauffage. Le circuit primaire comprend un détendeur et un évaporateur couplé thermiquement à la conduite d'air extrait pour récupérer de l'énergie sur l'air extrait de l'habitat. Par pilotage de la vanne 4-voies, l'installation permet ainsi d'être utilisée suivant l'un des modes de fonctionnement suivants :
- chauffage de l'habitat,
- chauffage de l'habitat combiné à la production d'eau chaude sanitaire,
- rafraîchissement de l'habitat,
- rafraîchissement de l'habitat combiné à la production d'eau chaude sanitaire.

En dépit des modes de fonctionnement proposés, l'installation présente plusieurs inconvénients :
- le condenseur permettant la production d'eau chaude sanitaire est constamment traversé par le fluide frigorigène indépendamment du mode de fonctionnement appliqué, induisant des surconsommations électriques du compresseur notamment lorsque l'appareil fonctionne dans le mode n'assurant que la fonction de chauffage,
- le circuit frigorifique unique augmente la charge de fluide frigorigène par circuit, ce qui dans certains cas peut être une contrainte réglementaire (par exemple dans le cas du fluide frigorigène R290),
- la variation de puissance pour le chauffage ne peut être réalisée qu'à partir d'un compresseur à vitesse variable,
- la récupération d'énergie sur l'air extrait ne peut être réalisée qu'en fonctionnement de la pompe à chaleur, ce qui se traduit par des consommations électriques supplémentaires dans certains cas de fonctionnement où il n'y pas de besoin de chauffage.

Le document DE202006009538U1 divulgue également une installation appartenant à la catégorie de celles capables de remplir une fonction de rafraichissement d'un local. Il s'agit d'une installation mettant en oeuvre une ventilation double flux qui inclut un échangeur thermique entre l'air extrait et l'air insufflé et deux pompes à chaleur de type réversibles indépendantes. Cette installation varie entre les trois modes de fonctionnement suivants :
- chauffage du local par l'une et/ou l'autre des première et deuxième pompes à chaleur réversibles,
- chauffage de l'eau chaude sanitaire avec la première pompe à chaleur et chauffage du local avec la deuxième pompe à chaleur réversible,
- refroidissement du local par l'une et/ou l'autre des première et deuxième pompes à chaleur réversibles.

Les deux pompes à chaleur réversibles peuvent fonctionner indépendamment ou séparément, dans chacun de ces trois modes. Pour la production d'eau chaude sanitaire, la deuxième pompe à chaleur réversible peut être ajoutée à la première pompe à chaleur réversible, ou bien la remplacer.

Pour permettre de mettre en oeuvre le deuxième mode, la première pompe à chaleur réversible comprend un troisième condenseur placé en série avec le premier condenseur et configuré pour réaliser la production d'eau chaude sanitaire. De même, la deuxième pompe à chaleur réversible comprend un quatrième condenseur placé en série avec le deuxième condenseur et configuré pour réaliser la production d'eau chaude sanitaire. L'aménagement en série des premier et troisième condenseurs permet simultanément de fournir la chaleur à l'eau chaude sanitaire (via le quatrième condenseur) et de fournir (via le troisième condenseur) la chaleur à l'air insufflé.

L'utilisation de deux pompes à chaleur réversibles rend la solution onéreuse et complexe. Les deux condenseurs de la première pompe à chaleur réversible étant placés en série, ils ne peuvent pas être utilisés séparément, mais seulement simultanément. Autrement dit, la fonction de production d'eau chaude sanitaire est obligatoirement combinée à la fonction de chauffage du local via le premier condenseur. D'autre part, toujours en raison de cette implantation en série des deux condenseurs de la première pompe à chaleur, il est impossible de réaliser simultanément une fonction de refroidissement du local avec la deuxième pompe à chaleur réversible et une fonction de production d'eau chaude sanitaire avec la première pompe à chaleur. Ainsi, la solution proposée par le document DE202006009538U1 manque de modularité et de souplesse d'utilisation.

### Objet de l'invention

Le but de la présente invention est de proposer une solution de conditionnement thermique d'un local et de production d'eau chaude sanitaire qui remédie aux inconvénients listés ci-dessus.

Notamment, un objet de l'invention est de fournir une installation thermique permettant de remplir, simultanément ou isolément, une fonction de production d'eau chaude sanitaire et une fonction de rafraîchissement et/ou de chauffage et/ou de ventilation, tout en permettant d'améliorer les performances générales, par exemple au sujet des consommations électriques ou de la charge de fluide frigorigène.

Un autre objet de l'invention est de fournir une installation thermique qui permette de pouvoir ajuster le niveau de puissance de chauffage facilement, sans requérir l'utilisation d'un compresseur à vitesse variable.

Un autre objet de l'invention est de fournir une telle installation thermique au moins partiellement sous la forme d'un appareil compact multifonctions.

Un premier aspect de l'invention concerne une installation thermique assurant un conditionnement thermique d'un local, par chauffage et/ou rafraîchissement et/ou ventilation, et une production d'eau chaude sanitaire. L'installation thermique comprend un premier circuit thermodynamique couplé thermiquement avec une source froide et au moins une source chaude configurées pour assurer la production d'eau chaude sanitaire et/ou pour assurer un chauffage du local, et un deuxième circuit thermodynamique couplé thermiquement avec une source froide et une source chaude configurées pour assurer sélectivement un chauffage ou un rafraîchissement du local.

Le premier circuit peut comprendre des éléments constituant une première pompe à chaleur non réversible et/ou le deuxième circuit comprend des éléments constituant une deuxième pompe à chaleur de type réversible. Le premier circuit peut notamment comprendre un montage à deux branches parallèles munies respectivement d'un condenseur couplé thermiquement avec une source chaude permettant d'assurer la production d'eau chaude sanitaire et d'un condenseur couplé thermiquement avec une autre source chaude permettant d'assurer le chauffage du local.

L'installation peut comprendre un système de ventilation mécanique contrôlée à double flux comportant un conduit d'extraction d'air depuis le local, un conduit d'insufflation d'air dans le local et un échangeur de récupération de chaleur assurant une transmission de chaleur entre l'air extrait et l'air insufflé. La source chaude couplée thermiquement avec un condenseur du premier circuit pour assurer un chauffage du local et/ou la source chaude couplée thermiquement avec un évaporateur/condenseur du deuxième circuit en cas de chauffage du local par le deuxième circuit peut être constituée par une partie du conduit d'insufflation d'air, positionnée en aval de l'échangeur de récupération, par rapport au sens de circulation de l'air, ladite partie du conduit d'insufflation constituant la source froide couplée thermiquement au deuxième circuit lorsqu'il assure un rafraîchissement du local. La source froide couplée thermiquement avec un évaporateur du premier circuit et/ou la source froide couplée thermiquement avec un évaporateur/condenseur du deuxième circuit en cas de chauffage du local par le deuxième circuit peut être constituée par une partie du conduit d'extraction d'air positionnée en aval de l'échangeur de récupération par rapport au sens de circulation de l'air, ladite partie du conduit d'extraction constituant la source chaude thermiquement couplée au deuxième circuit lorsqu'il assure un rafraîchissement du local.

Le condenseur du premier circuit permettant d'assurer un chauffage du local et l'évaporateur/condenseur du deuxième circuit couplé thermiquement à la source chaude en cas de chauffage du local par le deuxième circuit peuvent être positionnés côte à côte dans une configuration telle qu'ils sont tous deux couplés thermiquement à la même source chaude commune, notamment en étant traversés par un flux commun circulant d'un même fluide constitutif de cette source chaude.

L'évaporateur du premier circuit couplé thermiquement à la source froide et l'évaporateur/condenseur du deuxième circuit couplé thermiquement à la source froide en cas de chauffage du local par le deuxième circuit peuvent être positionnés côte à côte dans une configuration telle qu'ils sont tous deux couplés thermiquement à la même source froide commune, notamment en étant traversés par un flux commun circulant d'un même fluide constitutif de cette source froide.

L'installation peut comporter un appareil compact multifonctions sous la forme d'un boîtier intégrant tout ou partie des premier et deuxième circuits thermodynamiques et muni d'éléments permettant le raccordement aux sources froides et chaudes associées aux premier et deuxième circuits thermodynamiques.

Le deuxième circuit peut comprendre, montés en série entre eux, un compresseur, une vanne d'inversion de cycle, un évaporateur/condenseur couplé thermiquement avec la source chaude en cas de chauffage du local par le deuxième circuit, un montage comprenant deux détendeurs montés en parallèle entre eux, et un évaporateur/condenseur couplé thermiquement avec la source froide en cas de chauffage du local par le deuxième circuit, un détendeur étant actif en cas de chauffage du local par le deuxième circuit et l'autre détendeur étant actif en cas de rafraîchissement du local par le deuxième circuit.

La source chaude couplée thermiquement avec un condenseur du premier circuit pour assurer un chauffage du local et/ou la source chaude couplée thermiquement avec un évaporateur/condenseur du deuxième circuit en cas de chauffage du local, peut alternativement ou de manière complémentaire être choisie parmi les éléments suivants :
- de l'air provenant du local et à réinjecter dans le local dans le cadre d'un recyclage d'air,
- un liquide caloporteur alimentant des émetteurs,
- de l'air intérieur au local chauffé et/ou refroidi par des émetteurs à détente directe dans le local.

La source froide couplée thermiquement avec un évaporateur du premier circuit pour assurer la production d'eau chaude sanitaire et/ou le chauffage de l'enceinte, et/ou la source froide couplée thermiquement avec un évaporateur/condenseur du deuxième circuit en cas de chauffage du local, peut alternativement ou de manière complémentaire être choisie parmi les éléments suivants :
- de l'air extérieur au local, éventuellement préchauffé,
- un puits canadien,
- un capteur géothermique en fluide frigorigène,
- un circuit indépendant des premier et deuxième circuits thermodynamiques, pour la circulation d'un agent caloporteur.

Par ailleurs, des éléments complémentaires de chauffage d'eau chaude sanitaire, indépendants du premier circuit, peuvent être choisis parmi :
- une résistance électrique,
- un échangeur thermique d'appoint,
- des capteurs solaires chauffant un agent caloporteur circulant dans un circuit indépendant des premier et deuxième circuits thermodynamiques.

Un deuxième aspect de l'invention concerne un procédé de conditionnement thermique d'un local, par chauffage et/ou par rafraîchissement et/ou par ventilation, et de production d'eau chaude sanitaire comprenant une étape de production d'eau chaude sanitaire et/ou de chauffage du local par l'intermédiaire d'un premier circuit thermodynamique couplé thermiquement avec une source froide et au moins une source chaude idoines, et une étape sélectivement de chauffage ou de rafraîchissement du local par l'intermédiaire d'un deuxième circuit thermodynamique couplé thermiquement avec une source froide et une source chaude idoines.

Durant au moins une période de temps :
- une étape de chauffage du local par le deuxième circuit peut être mise en oeuvre au moins partiellement en même temps qu'une étape de chauffage du local par le premier circuit,
- et/ou une étape de chauffage du local par le deuxième circuit peut être mise en oeuvre au moins partiellement en même temps qu'une étape de production d'eau chaude sanitaire par le premier circuit,
- et/ou une étape de rafraîchissement du local par le deuxième circuit peut être mise en oeuvre au moins partiellement en même temps qu'une étape de production d'eau chaude sanitaire par le premier circuit.

Suite à une étape de chauffage du local par le deuxième circuit, le procédé peut comprendre une étape de dégivrage d'un évaporateur/condenseur du deuxième circuit préalablement couplé thermiquement avec la source froide durant l'étape de chauffage.

Dans le cas particulier où la source chaude couplée thermiquement au deuxième circuit lors d'un rafraîchissement du local par le deuxième circuit est formée par une même source commune avec la source froide couplée thermiquement au premier circuit, le procédé peut comprendre, suite à une étape de chauffage du local et/ou de production d'eau chaude sanitaire par le premier circuit, une étape de dégivrage d'un évaporateur du premier circuit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 à 5 représentent schématiquement cinq modes de réalisation d'une installation thermique selon l'invention,
- les figures 6 à 15 illustrent dix modes de fonctionnement de l'installation thermique selon le mode de réalisation de la figure 1.

### Description de modes préférentiels de l'invention

Il sera décrit dans la suite une installation thermique assurant un conditionnement thermique d'un local (par exemple un habitat) et une production d'eau chaude sanitaire, par exemple à destination du local. Le conditionnement thermique peut comprendre une fonction de chauffage du local et/ou une fonction de rafraîchissement du local et/ou une fonction de ventilation. Le conditionnement thermique du local peut être mis en oeuvre isolément ou en même temps que la fonction de production d'eau chaude sanitaire. La fonction de production d'eau chaude sanitaire peut aussi être mise en oeuvre isolément.

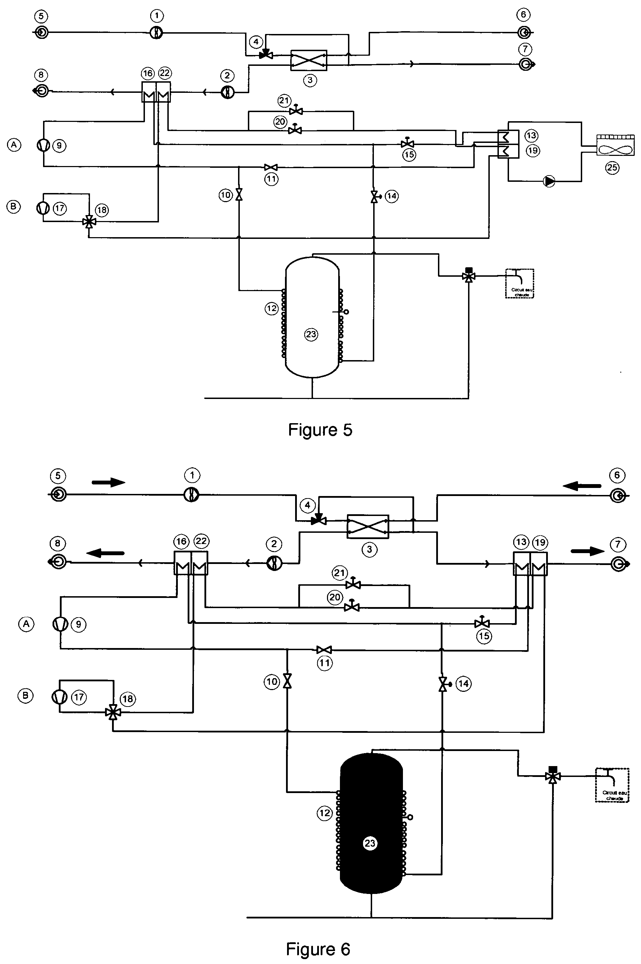

Cette installation thermique a pour vocation de se présenter sous la forme d'un appareil compact multifonctions pouvant avantageusement n'avoir qu'une régulation unique assurant le choix du mode de fonctionnement parmi une pluralité de modes de fonctionnement disponibles (par exemple 10 modes de fonctionnement respectivement correspondant aux figures 6 à 15) et le pilotage de l'appareil dans le mode de fonctionnement choisi. Il reste toutefois possible de prévoir qu'un réservoir d'eau chaude pour le stockage de l'eau chaude sanitaire produite puisse éventuellement être aménagé à l'extérieur du boîtier de cet appareil compact multifonctions.

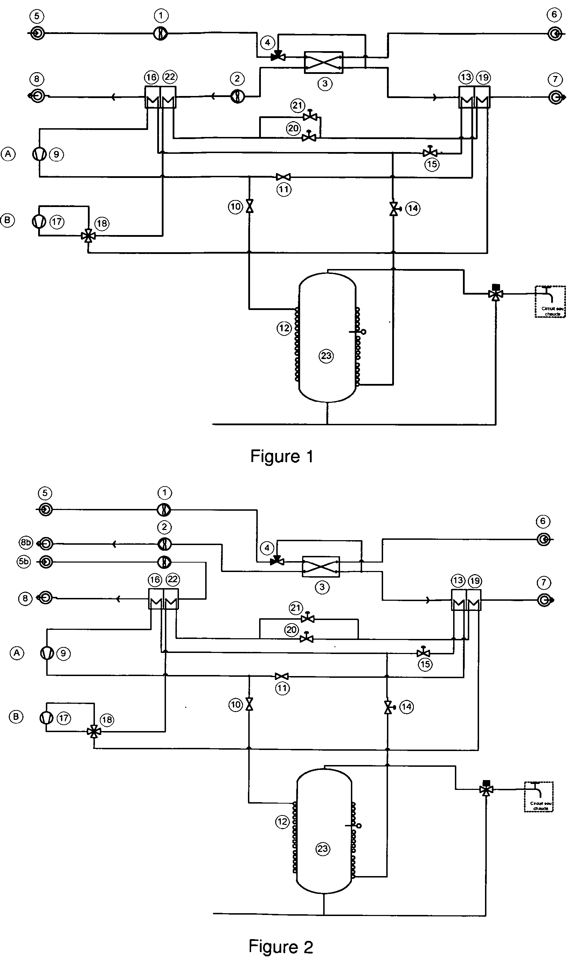

Une caractéristique importante de l'installation thermique est qu'elle comprend un premier circuit ou groupe thermodynamique (repéré « A » sur les figures 1 à 15) couplé thermiquement avec une source froide et au moins une source chaude décrites plus loin et configurées pour assurer la production d'eau chaude sanitaire et/ou pour assurer un chauffage du local, mais également un deuxième circuit ou groupe thermodynamique (repéré « B » sur les figures 1 à 15) couplé thermiquement avec une source froide et une source chaude décrites plus loin et configurées pour assurer sélectivement un chauffage ou un rafraîchissement du local.

Un premier mode de réalisation d'une telle installation thermique est représenté en figure 1 et décrit ci-dessous. Les 10 modes de fonctionnement possibles seront par la suite décrits (figure 6 à 15) en application à ce premier mode de réalisation de la figure 1. D'autres modes de réalisation seront également décrits respectivement en relation avec les figures 2 à 5.

Le premier circuit A comprend des éléments (décrits plus loin) constituant une première pompe à chaleur de type non réversible. En complément, le deuxième circuit B comprend des éléments (décrits plus loin) constituant une deuxième pompe à chaleur de type réversible. Les premier et deuxième circuits thermodynamiques A et B sont indépendants l'un de l'autre, en ce sens qu'ils peuvent fonctionner séparément ou conjointement, à des niveaux de température et de pression différents, voire même en utilisant la circulation de fluides frigorigènes de natures différentes. Il convient de préciser que le premier circuit A peut comprendre des éléments constituant une pompe à chaleur de type réversible, suivant les besoins.

Dans le cas du deuxième circuit B, en raison de sa capacité de fonctionnement réversible, les sources chaude et froide auxquelles le deuxième circuit B est couplé thermiquement jouent des rôles inversés suivant que le deuxième circuit B assure sélectivement la fonction de chauffage du local ou la fonction de rafraîchissement du local : la source chaude couplée thermiquement au deuxième circuit B en cas de chauffage du local par le deuxième circuit B assure le rôle de la source froide en cas de rafraîchissement du local par le deuxième circuit B, et inversement, la source froide couplée thermiquement au deuxième circuit B en cas de chauffage du local par le deuxième circuit B assure le rôle de la source chaude en cas de rafraîchissement du local par le deuxième circuit B.

L'installation thermique comprend, en complément des circuits A et B, un système de ventilation mécanique contrôlée à double flux comportant un conduit d'extraction d'air depuis le local, un conduit d'insufflation d'air dans le local et un échangeur 3 de récupération statique de chaleur assurant une transmission de chaleur entre l'air extrait et l'air insufflé. L'échangeur 3 est équipé d'un by-pass 4 sur l'air neuf insufflé. Un ventilateur d'insufflation 1 permet de prendre de l'air neuf de l'extérieur 5 du local pour et l'insuffler à l'intérieur 7 du local. Un ventilateur d'extraction 2 permet de prendre de l'air vicié 6 extrait du local et de le rejeter à l'extérieur 8 du local. L'échangeur 3 est positionné entre ces deux flux et permet de transférer l'énergie récupéré sur l'air extrait 6 vers l'air insufflé 7.

Le premier circuit A thermodynamique, globalement fermé, comprend néanmoins sur une partie un montage à deux branches parallèles munies respectivement d'un condenseur 12 couplé thermiquement avec une source chaude 23 permettant d'assurer la production d'eau chaude sanitaire et d'un condenseur 13 couplé thermiquement avec une autre source chaude permettant d'assurer le chauffage du local. Les deux condenseurs 12, 13, destinés à des fonctions différentes, sont donc montés en parallèle l'un de l'autre. La branche équipée du condenseur 12 comprend un détendeur 14 et une vanne d'arrêt 10 ou d'isolement, associés en série entre eux et avec le condenseur 12 correspondant. De la même manière, la branche équipée du condenseur 13 comprend un détendeur 15 et une vanne d'arrêt 11 ou d'isolement, associés en série entre eux et avec le condenseur 13 correspondant. Le premier circuit comprend également un évaporateur 16 et un compresseur 9 montés en série entre eux et en série avec le montage des deux branches parallèles. De manière préférentielle, le condenseur 12 est ici enroulé par exemple autour d'un réservoir de stockage formant la source chaude 23 destinée à la production d'eau chaude sanitaire. Il est également possible de prévoir que le condenseur 12 soit immergé dans le réservoir (directement au contact de l'eau ou bien par l'intermédiaire d'une double paroi). Les passages vers les condenseurs 12, 13 sont commandés respectivement par les vannes d'arrêt 10, 11. Ces dernières peuvent être des vannes modulantes pour s'assurer que le circuit A puisse réaliser les fonctions de chauffage et de production d'eau chaude sanitaire simultanément. Les condenseurs 12 et 13 peuvent être de toute nature, suivant la nature des sources chaude et froide auxquelles le circuit A est couplé thermiquement.

Le deuxième circuit B thermodynamique réversible, quant à lui comprend, montés en série entre eux : un compresseur 17, une vanne d'inversion de cycle 18 par exemple de type 4 voies, un premier évaporateur/condenseur 19 couplé thermiquement avec la source chaude en cas de chauffage du local par le deuxième circuit B, un montage comprenant deux détendeurs 20, 21 montés en parallèle entre eux, et un deuxième évaporateur/condenseur 22 couplé thermiquement avec la source froide lors d'un chauffage du local par le deuxième circuit B. Seul le détendeur 20 est actif en cas de chauffage du local par le deuxième circuit B tandis que seul l'autre détendeur 21 est actif lors d'un rafraîchissement du local par le deuxième circuit B. Par inversion de cycle, le premier évaporateur/condenseur 19 est couplé thermiquement avec la source froide, en cas de rafraîchissement du local par le deuxième circuit B. De manière inversée, le deuxième évaporateur/condenseur 22 est couplé thermiquement avec la source chaude lors d'un rafraîchissement du local par le deuxième circuit B. Les évaporateurs/condenseurs 19 et 22 peuvent être de toute nature, suivant la nature des sources chaude et froide auxquelles le circuit B est couplé thermiquement.

Dans la variante particulière du premier mode de réalisation, correspondant à la figure 1, la source chaude couplée thermiquement avec le condenseur 13 du premier circuit A pour assurer un chauffage du local et/ou la source chaude couplée thermiquement avec l'évaporateur/condenseur 19 du deuxième circuit B lors d'un chauffage du local par le deuxième circuit B, est constituée par une partie du conduit d'insufflation d'air de la ventilation double flux, cette partie du conduit étant positionnée en aval de l'échangeur 3 de récupération, par rapport au sens de circulation de l'air dans ce conduit (orienté de la référence 5 à la référence 7).

Comme indiqué précédemment, cette partie du conduit d'insufflation constitue également la source froide couplée thermiquement au deuxième circuit B lorsque le deuxième circuit B assure un rafraîchissement du local.

Dans la variante particulière du premier mode de réalisation, correspondant à la figure 1, la source froide couplée thermiquement avec l'évaporateur 16 du premier circuit A (que ce soit dans le cas d'un chauffage du local ou d'une production d'eau chaude sanitaire par le premier circuit A, la source froide étant unique et toujours la même dans le cas du premier circuit A) et/ou la source froide couplée thermiquement avec l'évaporateur/condenseur 22 du deuxième circuit B lors du chauffage du local par le deuxième circuit B, est constituée par une partie du conduit d'extraction d'air positionnée en aval de l'échangeur 3 de récupération, par rapport au sens de circulation de l'air dans ce conduit (orienté de la référence 6 à la référence 8).

Comme indiqué précédemment, cette partie du conduit d'extraction constitue la source chaude thermiquement couplée au deuxième circuit B lorsque le deuxième circuit B assure un rafraîchissement du local.

Dans un mode particulier non exclusif, le condenseur 13 du premier circuit A qui permet d'assurer un chauffage du local et l'évaporateur/condenseur 19 du deuxième circuit B couplé thermiquement à la source chaude en cas de chauffage du local par le deuxième circuit B, sont positionnés côte à côte, à proximité l'un de l'autre, dans une configuration leur permettant d'être tous deux couplés thermiquement à la même source chaude commune. Notamment, cette configuration est telle qu'ils sont avantageusement traversés par un flux commun circulant d'un même fluide constitutif de cette source chaude commune. Ici, le flux commun de fluide est l'air insufflé grâce à la ventilation double flux, en aval de l'échangeur 3. Avantageusement, la source chaude commune est constituée par la partie du conduit d'insufflation le long de laquelle l'évaporateur/condenseur 19 du deuxième circuit B couplé thermiquement à la source chaude en cas de chauffage du local par le deuxième circuit B est positionné en aval du condenseur 13 du premier circuit A permettant d'assurer un chauffage du local, par rapport au sens de circulation de l'air. Cette disposition particulière mais non exclusive permet avantageusement d'optimiser le fonctionnement de l'installation thermique en augmentant la performance du premier circuit A (car la température de sa source chaude est plus élevée que dans le cas d'une configuration inversée des éléments 13 et 19). Comme indiqué ensuite, cette augmentation des performances du circuit thermodynamique A permet d'exploiter celui-ci afin de créer de la chaleur sur l'évaporateur/condenseur 22, afin, sous certaines conditions détaillées plus loin, de réaliser un dégivrage de l'évaporateur 16. Une disposition inversée peut toutefois être prévue, en ce sens que le condenseur 13 du premier circuit A peut être positionné en aval de l'évaporateur/condenseur 19 du deuxième circuit B. Les échangeurs 13 et 19 peuvent même éventuellement être fusionnés en un seul échangeur intégrant les deux circuits.

Dans un mode particulier non exclusif, l'évaporateur 16 du premier circuit A couplé thermiquement à la source froide et l'évaporateur/condenseur 22 du deuxième circuit B couplé thermiquement à la source froide en cas de chauffage du local par le deuxième circuit B sont positionnés côte à côte, à proximité l'un de l'autre, dans une configuration leur permettant d'être tous deux couplés thermiquement à la même source froide commune. Notamment, cette configuration est telle qu'ils sont avantageusement traversés par un flux commun circulant d'un même fluide constitutif de cette source froide commune. Ici, le flux commun de fluide est l'air extrait grâce à la ventilation double flux, en aval de l'échangeur 3. Avantageusement, la source froide commune est constituée par la partie du conduit d'extraction le long de laquelle l'évaporateur/condenseur 22 du deuxième circuit B couplé thermiquement à la source froide en cas de chauffage du local par le deuxième circuit est positionné en amont de l'évaporateur 16 du premier circuit A, par rapport au sens de circulation de l'air. Cette disposition particulière mais non exclusive permet avantageusement d'optimiser le fonctionnement de l'installation thermique en utilisant la performance du premier circuit A afin de créer de la chaleur sur l'évaporateur/condenseur 22, afin de réaliser un dégivrage de l'évaporateur 16. Une disposition inversée peut toutefois être prévue, en ce sens que l'évaporateur 16 du premier circuit A peut être positionné en aval de l'évaporateur/condenseur 22 du deuxième circuit B. Les échangeurs 16 et 22 peuvent même éventuellement être fusionnés en un seul échangeur intégrant les deux circuits.

Comme indiqué précédemment, l'installation comporte un appareil compact multifonctions sous la forme d'un boîtier intégrant tout ou partie des premier et deuxième circuits thermodynamiques A, B et muni d'éléments permettant le raccordement aux sources froides et chaudes associées aux premier et deuxième circuits thermodynamiques A, B. Dans le cas particulier de la figure 1, le boîtier comprend deux éléments permettant de raccorder une arrivée et une sortie du conduit de l'air extrait et deux éléments permettant de raccorder une arrivée et une sortie du conduit de l'air insufflé.

Il est possible de prévoir que le réservoir 23 d'eau chaude sanitaire soit préférentiellement intégré à l'appareil compact multifonctions, notamment dans son boîtier.

Toutefois, le réservoir 23 peut aussi être déporté du boîtier. Une séparation volontaire entre le réservoir 23 (source chaude) et le boîtier permet de scinder le système en deux parties de manière à mieux transporter ou positionner le réservoir dans le local. Une partie du premier circuit A équipée du condenseur 12 permettant d'assurer la production d'eau chaude sanitaire est dans ce cas disposée en dehors du boîtier de sorte à pouvoir chauffer le réservoir 23 extérieur au boîtier, le boîtier permettant le passage du premier circuit A entre l'intérieur et l'extérieur du boîtier.

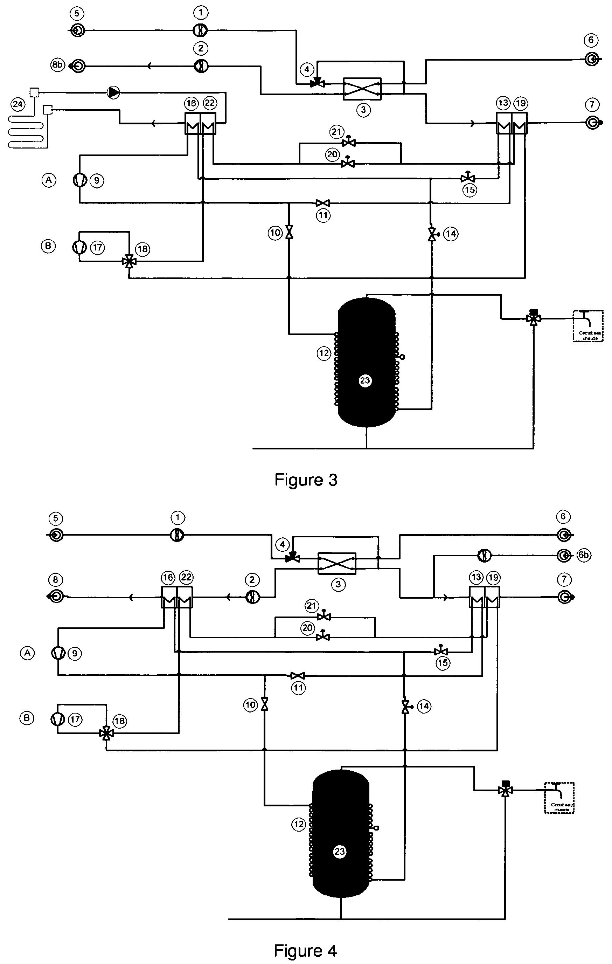

Alternativement, la source froide couplée thermiquement avec un évaporateur 16 du premier circuit A pour assurer la production d'eau chaude sanitaire et/ou le chauffage de l'enceinte ou du local, et/ou la source froide couplée thermiquement avec un évaporateur/condenseur 22 du deuxième circuit B en cas de chauffage du local, peut être choisie parmi les éléments suivants :
- un puits canadien ou de l'air extérieur au local, éventuellement préchauffé, repéré 5b (il s'agit du deuxième mode de réalisation d'installation thermique en référence à la figure 2),
- un circuit indépendant 24 des premier et deuxième circuits thermodynamiques A et B, pour la circulation d'un agent caloporteur (il s'agit du troisième mode de réalisation d'installation thermique en référence à la figure 3),
- un capteur géothermique en fluide frigorigène.

Alternativement, la source chaude couplée thermiquement avec un condenseur 13 du premier circuit A pour assurer un chauffage du local et/ou la source chaude couplée thermiquement avec un évaporateur/condenseur 19 du deuxième circuit B en cas de chauffage du local, peut être choisie parmi les éléments suivants :
- de l'air provenant du local et à réinjecter dans le local dans le cadre d'un recyclage 6b d'air (il s'agit du quatrième mode de réalisation d'installation thermique en référence à la figure 4),
- un liquide caloporteur alimentant des émetteurs 25 (il s'agit du cinquième mode de réalisation d'installation thermique en référence à la figure 5),
- de l'air intérieur au local chauffé et/ou refroidi par des émetteurs à détente directe dans le local.

L'installation thermique peut comporter des éléments complémentaires de chauffage d'eau sanitaire (non représentés), indépendants du premier circuit A et participant à la production d'eau chaude sanitaire. Les éléments complémentaires de chauffage peuvent être notamment choisis parmi :
- une résistance électrique,
- un échangeur thermique d'appoint,
- des capteurs solaires chauffant un agent caloporteur circulant dans un circuit indépendant des premier et deuxième circuits thermodynamiques.

Le débit d'air extrait et le débit d'air insufflé peuvent individuellement être modulés en fonction des besoins des premier et deuxième circuits A, B et en fonction du besoin de renouvellement d'air du local. Une alternative consiste à ajuster les débits d'air de façon à minimiser les consommations d'énergie entre celles du ventilateur, des pompes à chaleur et des pertes par renouvellement d'air tout en satisfaisant les contraintes réglementaires de renouvellement d'air. Préférentiellement, la valeur la plus grande de débit établie à partir de ces deux types de conditions pourra être appliquée. D'autre part, le débit d'air extrait et/ou le débit d'air insufflé peuvent être établis à leur valeur maximale lors d'un besoin rapide d'eau chaude sanitaire ou de chauffage encore de renouvellement d'air.

Dans la suite de la description, le fonctionnement de l'installation thermique précédemment décrite va être détaillé, en application, à titre d'exemple, au premier mode de réalisation selon la figure 1.

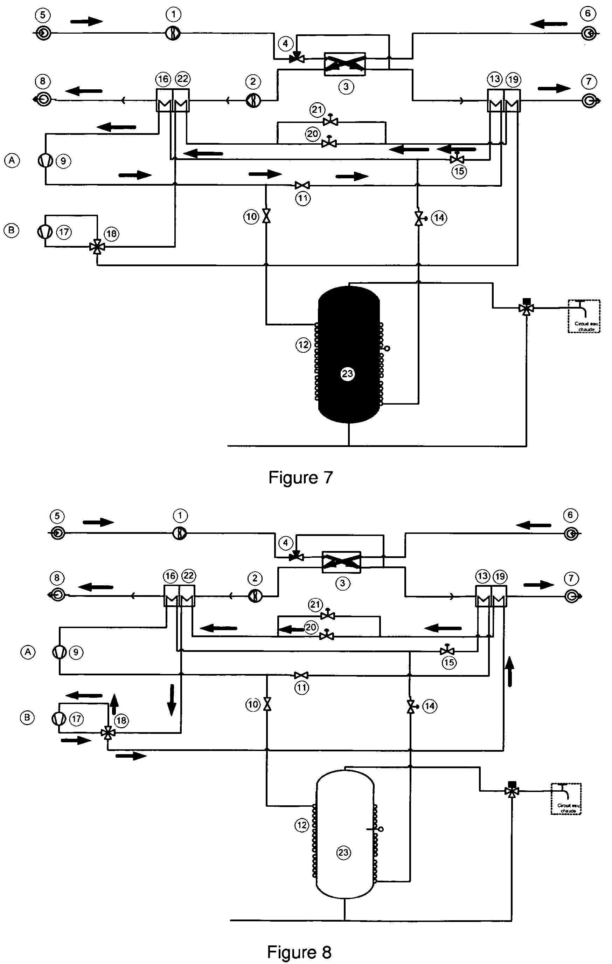

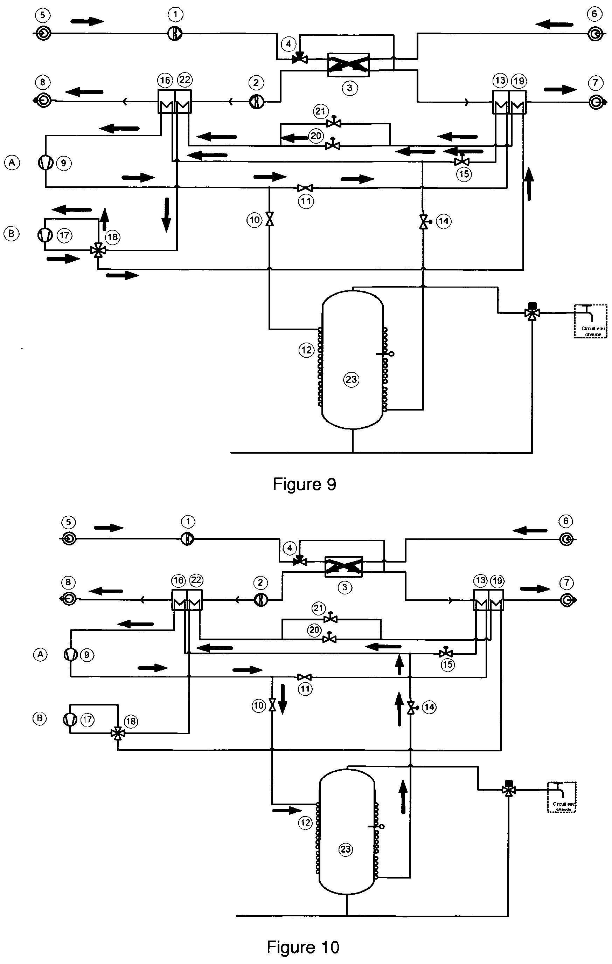

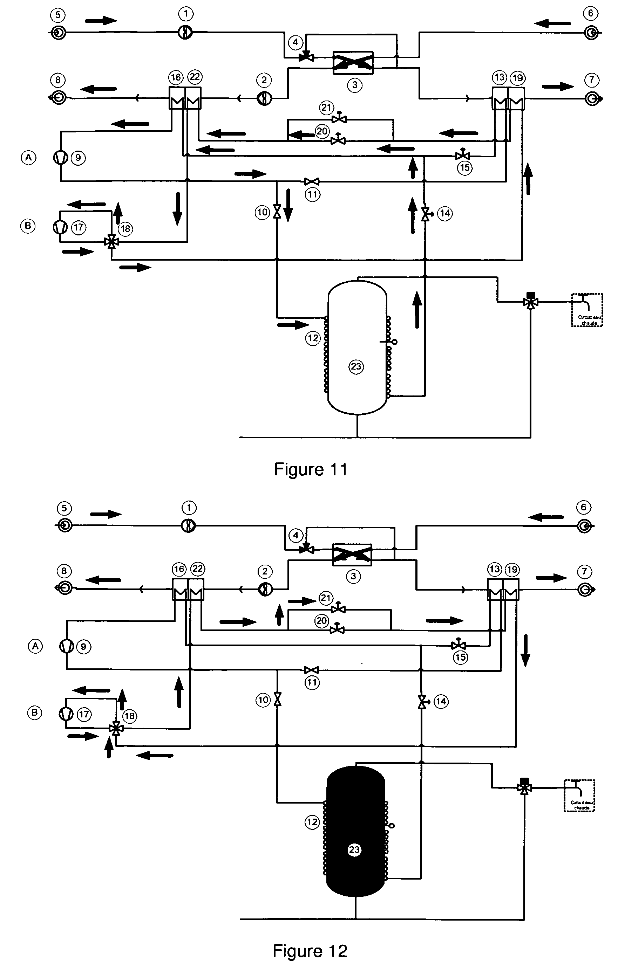

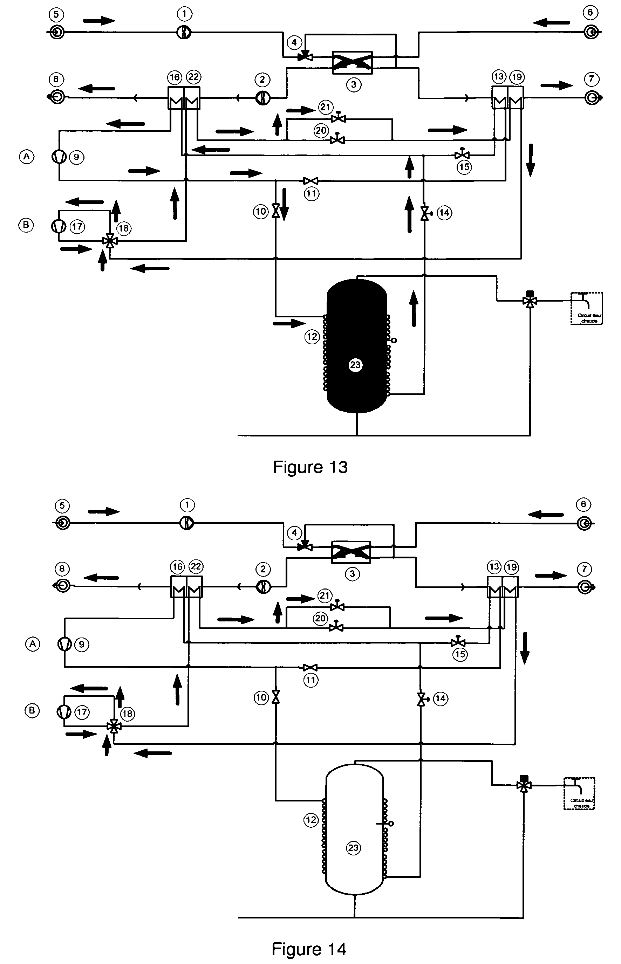

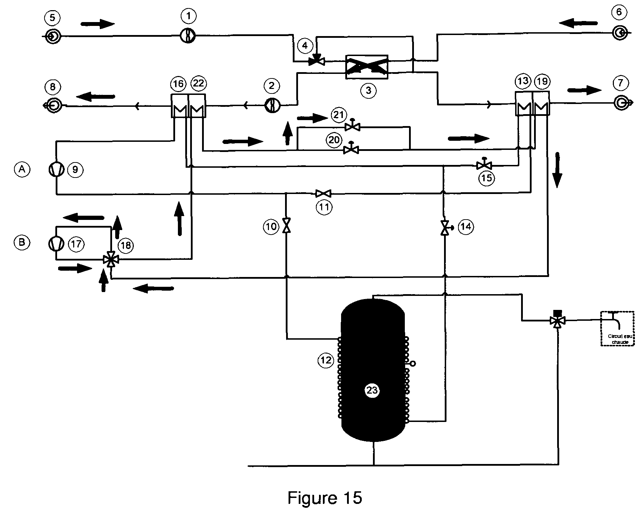

Il ressort de ce qui précède que l'installation thermique peut être commandée vers au moins les dix modes de fonctionnement suivants :
- un premier mode (figure 6) où l'installation thermique où les deux circuits A et B sont arrêtés et seule la ventilation double flux assure une récupération statique d'énergie sur la ventilation,
- un deuxième mode (figure 7) où l'installation thermique réalise une fonction de chauffage par l'intermédiaire du circuit A,
- un troisième mode (figure 8) où l'installation thermique réalise une fonction de chauffage par l'intermédiaire du circuit B,
- un quatrième mode (figure 9) où l'installation thermique réalise une fonction de chauffage par l'intermédiaire des circuits A et B conjointement,
- un cinquième mode (figure 10) où l'installation thermique réalise uniquement une fonction de production d'eau chaude sanitaire par l'intermédiaire du circuit A,
- un sixième mode (figure 11) où l'installation thermique réalise simultanément une fonction de production d'eau chaude sanitaire par l'intermédiaire du circuit A et une fonction de chauffage par l'intermédiaire du circuit B,
- un septième mode (figure 12) où l'installation thermique réalise une fonction de rafraîchissement par l'intermédiaire du circuit B,
- un huitième mode (figure 13) où l'installation thermique réalise simultanément une fonction de production d'eau chaude sanitaire par l'intermédiaire du circuit A et une fonction de rafraîchissement par l'intermédiaire du circuit B,
- un neuvième mode (figure 14) où l'installation thermique réalise un dégivrage de l'élément 22 du circuit B,
- et un dixième mode (figure 15) où l'installation thermique réalise un dégivrage de l'élément 16 du circuit A.

De manière générale avant de détailler les dix modes de fonctionnement listés ci-dessus, pour réaliser un conditionnement thermique du local et/ou une production d'eau chaude sanitaire, il est prévu la mise en oeuvre d'une étape de production d'eau chaude sanitaire et/ou de chauffage du local par l'intermédiaire du premier circuit thermodynamique A couplé thermiquement avec une source froide et au moins une source chaude idoines (détaillées précédemment) et d'une étape sélectivement de chauffage ou de rafraîchissement du local par l'intermédiaire du deuxième circuit thermodynamique B couplé thermiquement avec une source froide et une source chaude idoines (détaillées précédemment).

Il existe au moins une période de temps où les deux étapes sont réalisées en même temps. Ainsi, durant au moins cette période de temps :
- une étape de chauffage du local par le deuxième circuit B est mise en oeuvre au moins partiellement en même temps qu'une étape de chauffage du local par le premier circuit A,
- et/ou une étape de chauffage du local par le deuxième circuit B est mise en oeuvre au moins partiellement en même temps qu'une étape de production d'eau chaude sanitaire par le premier circuit A,
- et/ou une étape de rafraîchissement du local par le deuxième circuit B est mise en oeuvre au moins partiellement en même temps qu'une étape de production d'eau chaude sanitaire par le premier circuit A.

D'autre part, il peut exister au moins une période de temps, différente de celle-ci-dessus, au cours de laquelle seule l'une des deux étapes est réalisée.

Par ailleurs, suite à une étape de chauffage du local par le deuxième circuit B, en référence au neuvième mode de fonctionnement illustré à la figure 14, une étape peut être exécutée de dégivrage de l'évaporateur/condenseur 22 du deuxième circuit B préalablement couplé thermiquement avec la source froide durant l'étape de chauffage. Cette étape de dégivrage comprend la mise en oeuvre d'une étape de rafraîchissement du local par le deuxième circuit B au cours de laquelle ledit évaporateur/condenseur 22 est couplé avec la source chaude, permettant ainsi de le dégivrer directement. Cette manière de répondre à la problématique connue du dégivrage n'est pas limitative, toute autre solution connue ou équivalente pouvant être mise en oeuvre.

En référence au dixième mode de fonctionnement illustré à la figure 15, dans le cas où la source chaude couplée thermiquement au deuxième circuit B lors d'un rafraîchissement du local par le deuxième circuit B est formée par une même source de chaleur commune avec la source froide couplée thermiquement au premier circuit A, il peut également être prévu, suite à une étape de chauffage du local et/ou de production d'eau chaude sanitaire par le premier circuit A, une étape de dégivrage de l'évaporateur 16 du premier circuit A. Cette étape de dégivrage peut comprendre la mise en oeuvre d'une étape de rafraîchissement du local par le deuxième circuit B. Alternativement, une dérivation sur le circuit aéraulique peut être rajoutée afin de ne pas rafraîchir le local. Une autre possibilité pour éviter un rafraîchissement est de diminuer ou d'annuler le débit d'air insufflé. Dans tous les cas, l'évaporateur/condenseur 22 du deuxième circuit B est couplé thermiquement à une source chaude, la chaleur servant alors à dégivrer l'évaporateur 16 du premier circuit A grâce au flux commun de fluide constitutif de la source commune.

Dans le premier mode de fonctionnement (figure 6), les circuits thermodynamiques A et B sont arrêtés. Ce mode de fonctionnement est identique à un récupérateur double flux classique équipé d'un by-pass 4. Le ventilateur 1 d'insufflation est en marche : il permet de prendre de l'air neuf extérieur 5, de le réchauffer ou le rafraîchir en fonction des conditions de température extérieure et intérieure par l'intermédiaire de l'échangeur 3 de récupération double flux avant de l'insuffler dans l'habitat 7. Le ventilateur 2 d'extraction est en marche : il permet de prendre de l'air vicié 6, d'en récupérer son énergie ou non en fonction des conditions de température extérieure et intérieure par l'intermédiaire de l'échangeur 3 de récupération double flux avant de de le rejeter vers l'extérieur 8. En fonction des températures extérieure et intérieure, le by-pass 4 du récupérateur double flux est activé.

Dans le deuxième mode de fonctionnement (figure 7), la ventilation double flux fonctionne comme indiqué au premier mode de fonctionnement. Le circuit thermodynamique A est en marche et le circuit thermodynamique B est à l'arrêt. La vanne d'arrêt 10 est fermée et la vanne d'arrêt 11 est ouverte : le circuit A assure une fonction de chauffage du local. Le condenseur 13 réchauffe l'air neuf en sortie de l'échangeur 3. En sortie du condenseur 13, le fluide frigorigène se détend dans le détendeur 15 avant d'alimenter l'évaporateur 16 positionné sur l'air extrait en sortie de l'échangeur 3. Il récupère de l'énergie sur l'air extrait avant d'être rejeté vers l'extérieur 8. Le condenseur 12 et le détendeur 14 ne sont pas alimentés en fluide frigorigène du fait de la fermeture de la vanne 10.

Dans le troisième mode de fonctionnement (figure 8), la ventilation double flux fonctionne comme indiqué au premier mode de fonctionnement. Le circuit thermodynamique B est en marche et le circuit thermodynamique A est à l'arrêt. Le compresseur 17 est mis en marche et la vanne 4-voies 18 est positionnée en mode chauffage. L'évaporateur/condenseur 19, qui fonctionne en condenseur dans ce mode, réchauffe l'air neuf en sortie de l'échangeur 3. En sortie de l'évaporateur/condenseur 19, le fluide frigorigène se détend dans le détendeur 20 avant d'alimenter l'évaporateur/condenseur 22 qui fonctionne en évaporateur dans ce mode. L'évaporateur/condenseur 22 est positionné sur l'air extrait en sortie de l'échangeur 3 et récupère de l'énergie sur l'air extrait avant d'être rejeté vers l'extérieur 8.

Dans le quatrième mode de fonctionnement (figure 9), la ventilation double flux fonctionne comme indiqué au premier mode de fonctionnement. Les circuits thermodynamiques A et B sont tous deux en marche et fonctionnent comme dans les deuxième et troisième modes de fonctionnement. L'air neuf est préchauffé ou non par l'échangeur 3 en fonction des conditions de température intérieure et extérieure, puis il est réchauffé successivement par le condenseur 13 du circuit thermodynamique A et par l'évaporateur/condenseur 19 du circuit thermodynamique B avant d'être insufflé dans le local 7. L'air extrait du local 6 est refroidi ou non par l'intermédiaire de l'échangeur 3 en fonction des conditions de température intérieure et extérieure, puis il est refroidi successivement par l'évaporateur/condenseur 22 du circuit thermodynamique B et par l'évaporateur 16 du circuit thermodynamique A avant d'être rejeté à l'extérieur 8.

Dans le cinquième mode de fonctionnement (figure 10), la ventilation double flux fonctionne comme indiqué au premier mode de fonctionnement. Le circuit thermodynamique A est en marche et le circuit thermodynamique B est à l'arrêt. La vanne d'arrêt 10 est ouverture et la vanne 11 est fermée : il fonctionne en mode production d'eau chaude sanitaire. Le condenseur 12 réchauffe l'eau située à l'intérieur du réservoir 23 de stockage. En sortie du condenseur 12, le fluide frigorigène se détend dans le détendeur 14 avant d'alimenter l'évaporateur 16 positionné sur l'air extrait en sortie de l'échangeur 3. Il récupère de l'énergie sur l'air extrait 6 avant d'être rejeté vers l'extérieur 8. Le condenseur 13 et le détendeur 15 ne sont pas alimentés en fluide du fait de la fermeture de la vanne d'arrêt 11.

Dans le sixième mode de fonctionnement (figure 11), la ventilation double flux fonctionne comme indiqué au premier mode de fonctionnement. Les circuits thermodynamiques A et B sont tous deux en marche et fonctionnent comme respectivement dans les cinquième et troisième modes de fonctionnement. L'air neuf est préchauffé ou non par l'échangeur 3 en fonction des conditions de température intérieure et extérieure, puis il est réchauffé par l'évaporateur/condenseur 19 du circuit thermodynamique B avant d'être insufflé dans le local 7. L'air extrait du local 6 est refroidi ou non par l'intermédiaire de l'échangeur 3 en fonction des conditions de température intérieure et extérieure, puis il est refroidi successivement par l'évaporateur/condenseur 22 du circuit thermodynamique B et par l'évaporateur 16 du circuit thermodynamique A avant d'être rejeté à l'extérieur 8.

Dans le septième mode de fonctionnement (figure 12), la ventilation double flux fonctionne comme indiqué au premier mode de fonctionnement. Le circuit thermodynamique B est en marche et le circuit thermodynamique A est à l'arrêt. Le compresseur 17 est mis en marche et la vanne 4-voies 18 est positionnée en mode rafraîchissement. L'évaporateur/condenseur 22 qui fonctionne en condenseur dans ce mode est positionné sur le conduit d'air extrait, en sortie de l'échangeur et réchauffe l'air extrait avant d'être rejeté vers l'extérieur 8. En sortie de l'évaporateur/condenseur 22, le fluide frigorigène se détend dans le détendeur 21 avant d'alimenter l'évaporateur/condenseur 19 qui fonctionne en évaporateur dans ce mode. Il refroidit l'air neuf en sortie de l'échangeur 3 avant d'être insufflé dans le local 7 pour rafraîchir l'ambiance.

Dans le huitième mode de fonctionnement (figure 13), la ventilation double flux fonctionne comme indiqué au premier mode de fonctionnement. Les circuits thermodynamiques A et B sont tous deux en marche et fonctionnent comme respectivement dans les septième et troisième modes de fonctionnement. L'air neuf 5 est pré refroidi ou non par l'échangeur 3 en fonction des conditions de température intérieure et extérieure, puis il est refroidi par l'évaporateur/condenseur 19 du circuit thermodynamique B avant d'être insufflé dans le local 7. L'air extrait 6 du local est réchauffé ou non par l'intermédiaire de l'échangeur 3 en fonction des conditions de température intérieure et extérieure, puis il est successivement réchauffé par l'évaporateur/condenseur 22 du circuit thermodynamique B et refroidi par l'évaporateur 16 du circuit thermodynamique A avant d'être rejeté à l'extérieur 8. Ce montage permet de valoriser l'énergie rejetée par l'évaporateur/condenseur 22 du circuit thermodynamique B en mode rafraîchissement pour la production d'eau chaude sanitaire.

Dans le neuvième mode de fonctionnement (figure 14), un dégivrage de l'évaporateur/condenseur 22 du circuit thermodynamique B est réalisé. Dans certaines conditions de fonctionnement en mode chauffage, l'évaporateur/condenseur 22 peut givrer du fait de la présence d'humidité dans l'air extrait et d'une température d'évaporation dans l'évaporateur/condenseur 22 négative. Afin de ne pas dégrader les performances du circuit thermodynamique B, il est nécessaire de dégivrer l'évaporateur/condenseur 22. La ventilation double flux fonctionne comme indiqué au premier mode de fonctionnement. Une variante consiste à stopper l'insufflation en arrêtant le ventilateur 1. Le circuit thermodynamique B est en marche et le circuit thermodynamique A est à l'arrêt. Lors de la détection d'un givrage de l'évaporateur/condenseur 22, la vanne 4-voies 18 est positionnée en mode rafraîchissement. Le fonctionnement est alors identique au septième mode 7. L'évaporateur/condenseur 22 devient condenseur et couplé thermiquement à une source chaude, ce qui permet de supprimer le givre et l'évaporateur/condenseur 19 devient évaporateur. Dans ce cas, l'air neuf en sortie de l'échangeur est refroidi par l'évaporateur/condenseur 19 avant d'être insufflé dans le local 7. Une variante consiste à arrêter le ventilateur 1 et profiter de l'inertie de l'échangeur pour le dégivrage.

Dans le dixième mode de fonctionnement (figure 15), un dégivrage de l'évaporateur 16 du circuit thermodynamique A est réalisé. Dans certaines conditions de fonctionnement en mode chauffage, l'évaporateur 16 peut givrer du fait de la présence d'humidité dans l'air extrait et d'une température d'évaporation dans l'évaporateur 16 négative. Afin de ne pas dégrader les performances du circuit thermodynamique A, il est nécessaire de dégivrer l'évaporateur 16. La ventilation double flux fonctionne comme indiqué au premier mode de fonctionnement. Une variante consiste à stopper l'insufflation en arrêtant le ventilateur 1. Lors de la détection d'un givrage de l'évaporateur 16, le circuit thermodynamique A est arrêté et le circuit thermodynamique B est mis en marche selon le neuvième mode de fonctionnement 9. L'évaporateur/condenseur 22 devient condenseur ce qui permet de réchauffer l'air extrait du local avant d'alimenter l'évaporateur 16 avec de l'air chaud et de supprimer ainsi le givre. Dans ce cas, l'air neuf en sortie de l'échangeur 3 est refroidi par l'évaporateur/condenseur 19 avant d'être insufflé dans le local. Une variante consiste à arrêter le ventilateur 1 et profiter de l'inertie de l'échangeur pour le dégivrage.

L'invention présente finalement au moins les avantages suivants :
- la charge en fluide frigorigène est réduite par rapport à un circuit frigorifique unique regroupant l'ensemble des fonctionnalités,
- fonctionnement possible du chauffage en secours en cas de panne de l'un des deux circuits A ou B,
- étagement de puissance possible pour le chauffage par les mises en route indépendantes ou simultanées des deux circuits A et B,
- dégivrage du premier circuit A non-réversible par inversion de cycle du deuxième circuit B réversible,
- production d'eau chaude sanitaire simultanément avec le chauffage du local,
- possibilité de réaliser un rafraîchissement du local uniquement,
- production d'eau chaude sanitaire simultanément avec le rafraîchissement du local, en valorisant l'énergie issue du condenseur du circuit B fonctionnant en mode rafraîchissement pour la production d'eau chaude sanitaire via l'évaporateur de l'autre circuit A fonctionnant en mode de production d'eau chaude sanitaire,
- fonctionnement possible en mode de récupération d'énergie de l'air extrait pour l'insufflation par l'intermédiaire d'un échangeur 3 statique sans avoir recours au fonctionnement des circuits A et B,
- amélioration de la modularité et de la souplesse d'utilisation et de fonctionnement de l'installation.

Il résulte de ce qui précède les points suivants :
- le premier circuit thermodynamique A de l'installation selon l'invention varie entre un premier mode de fonctionnement dans lequel il assure uniquement une fonction de chauffage du local, un deuxième mode de fonctionnement dans lequel il assure uniquement une fonction de production d'eau chaude sanitaire et un troisième mode de fonctionnement dans lequel il assure simultanément les fonctions de chauffage et de production d'eau chaude sanitaire : ce deuxième mode est indisponible avec une installation telle que divulguée dans le document DE202006009538U1 précédemment évoqué, ce qui permet une amélioration de la modularité et de la souplesse d'utilisation et de fonctionnement de l'installation.
- le premier circuit thermodynamique A de l'installation selon l'invention varie uniquement entre ces premier, deuxième et troisième modes de fonctionnement : le premier circuit thermodynamique A ne peut pas réaliser une fonction de rafraichissement du local, c'est le deuxième circuit thermodynamique B qui est dédié à cette fonction. Il s'agit donc de dispositions contraires à celles du document DE202006009538U1 précédemment évoqué où la première pompe à chaleur est réversible et peut aussi assurer un rafraichissement du local ; il en résulte une possibilité de simplification de l'installation selon l'invention.
- le deuxième circuit thermodynamique B de l'installation selon l'invention varie uniquement entre un premier mode de fonctionnement dans lequel il assure une fonction de chauffage du local et un deuxième mode de fonctionnement dans lequel il assure une fonction de rafraîchissement du local. Il s'agit donc de dispositions contraires à celles du document DE202006009538U1 précédemment évoqué où la deuxième pompe à chaleur réversible peut aussi servir à assurer une fonction de production d'eau chaude sanitaire ; il en résulte une possibilité de simplification de l'installation selon l'invention.
- les premier et deuxième circuits thermodynamiques A et B de l'installation selon l'invention sont configurés de sorte que le deuxième circuit thermodynamique B peut occuper le deuxième mode de fonctionnement indépendamment du mode de fonctionnement occupé par le premier circuit thermodynamique A parmi ses premier, deuxième et troisième modes de fonctionnement. Il s'agit donc de dispositions contraires et avantageuses par rapport à celles du document DE202006009538U1 précédemment évoqué où la deuxième pompe à chaleur réversible ne peut pas réaliser une fonction de rafraichissement en même temps qu'une fonction de production d'eau chaude sanitaire par la première pompe à chaleur réversible ; il en résulte une amélioration de la modularité et de la souplesse d'utilisation et de fonctionnement de l'installation.

Par ailleurs, il est rappelé que dans un mode de réalisation de l'installation selon l'invention, il est prévu qu'uniquement l'une des deux pompes à chaleur est de type réversible de sorte que l'autre pompe à chaleur soit avantageusement de type non réversible, ce qui permet une simplification de l'installation et une réduction des coûts.

Il est aussi rappelé que selon l'installation objet de l'invention, afin de simplifier la conception et diminuer les coûts, il est exclu que la pompe à chaleur réversible puisse assurer une fonction de production d'eau chaude sanitaire, contrairement à l'installation décrite dans le document DE202006009538U1 précédemment évoqué où les deux pompes à chaleur strictement réversibles peuvent chacune assurer la fonction de production d'eau chaude sanitaire.

Enfin, il est rappelé que, dans l'installation selon l'invention, le condenseur couplé à une source chaude assurant la production d'eau chaude sanitaire est avantageusement en parallèle avec le condenseur assurant le chauffage du local. L'installation selon l'invention permet de fonctionner selon un mode où elle réalise uniquement une fonction de production d'eau chaude sanitaire. Il s'agit donc de dispositions contraires à celles du document DE202006009538U1 précédemment évoqué où les deux condenseurs de la première pompe à chaleur réversible sont montés en série ce qui implique qu'il n'est pas possible de réaliser uniquement une production d'eau chaude sanitaire, la réalisation dans le même temps d'une fonction de chauffage du local étant obligatoire. Il en résulte une amélioration de la modularité et de la souplesse d'utilisation et de fonctionnement de l'installation selon l'invention.

## Revendications

1. Installation thermique assurant un conditionnement thermique d'un local, par chauffage et/ou rafraîchissement et/ou ventilation, et une production d'eau chaude sanitaire, installation thermique comprenant un premier circuit thermodynamique (A) couplé thermiquement avec une source froide et au moins une source chaude configurées pour assurer la production d'eau chaude sanitaire et/ou pour assurer un chauffage du local, **caractérisé en ce que** l'installation comporte également un deuxième circuit thermodynamique (B) couplé thermiquement avec une source froide et une source chaude configurées pour assurer sélectivement un chauffage ou un rafraîchissement du local.

2. Installation selon la revendication 1, **caractérisée en ce que** le premier circuit (A) comprend des éléments constituant une première pompe à chaleur non réversible et/ou le deuxième circuit (B) comprend des éléments constituant une deuxième pompe à chaleur de type réversible.

3. Installation selon l'une des revendications 1 ou 2, **caractérisée en ce que** le premier circuit (A) comprend un montage à deux branches parallèles munies respectivement d'un condenseur (12) couplé thermiquement avec une source chaude (23) permettant d'assurer la production d'eau chaude sanitaire et d'un condenseur (13) couplé thermiquement avec une autre source chaude permettant d'assurer le chauffage du local.

4. Installation selon l'une des revendications 1 à 3, **caractérisée en ce qu'**elle comprend un système de ventilation mécanique contrôlée à double flux comportant un conduit d'extraction d'air depuis le local, un conduit d'insufflation d'air dans le local et un échangeur (3) de récupération de chaleur assurant une transmission de chaleur entre l'air extrait et l'air insufflé.

5. Installation selon la revendication 4, **caractérisée en ce que** la source chaude couplée thermiquement avec un condenseur (13) du premier circuit (A) pour assurer un chauffage du local et/ou la source chaude couplée thermiquement avec un évaporateur/condenseur (19) du deuxième circuit (B) en cas de chauffage du local par le deuxième circuit (B) est constituée par une partie du conduit d'insufflation d'air, positionnée en aval de l'échangeur (3) de récupération, par rapport au sens de circulation de l'air, ladite partie du conduit d'insufflation constituant la source froide couplée thermiquement au deuxième circuit (B) lorsqu'il assure un rafraîchissement du local.

6. Installation selon l'une des revendications 4 et 5, **caractérisée en ce que** la source froide couplée thermiquement avec un évaporateur (16) du premier circuit (A) et/ou la source froide couplée thermiquement avec un évaporateur/condenseur (22) du deuxième circuit (B) en cas de chauffage du local par le deuxième circuit (B) est constituée par une partie du conduit d'extraction d'air positionnée en aval de l'échangeur (3) de récupération par rapport au sens de circulation de l'air, ladite partie du conduit d'extraction constituant la source chaude thermiquement couplée au deuxième circuit (B) lorsqu'il assure un rafraîchissement du local.

7. Installation selon l'une des revendications 1 à 6, **caractérisée en ce que** le condenseur (13) du premier circuit (A) permettant d'assurer un chauffage du local et l'évaporateur/condenseur (19) du deuxième circuit (B) couplé thermiquement à la source chaude en cas de chauffage du local par le deuxième circuit (B) sont positionnés côte à côte dans une configuration telle qu'ils sont tous deux couplés thermiquement à la même source chaude commune, notamment en étant traversés par un flux commun circulant d'un même fluide constitutif de cette source chaude.

8. Installation selon l'une des revendications 1 à 7, **caractérisée en ce que** l'évaporateur (16) du premier circuit (A) couplé thermiquement à la source froide et l'évaporateur/condenseur (22) du deuxième circuit (B) couplé thermiquement à la source froide en cas de chauffage du local par le deuxième circuit (B) sont positionnés côte à côte dans une configuration telle qu'ils sont tous deux couplés thermiquement à la même source froide commune, notamment en étant traversés par un flux commun circulant d'un même fluide constitutif de cette source froide.

9. Installation selon l'une des revendications 1 à 8, **caractérisée en ce qu'**elle comporte un appareil compact multifonctions sous la forme d'un boîtier intégrant tout ou partie des premier et deuxième circuits thermodynamiques (A, B) et muni d'éléments permettant le raccordement aux sources froides et chaudes associées aux premier et deuxième circuits thermodynamiques (A, B).

10. Installation selon l'une des revendications 1 à 9, **caractérisée en ce que** le deuxième circuit (B) comprend, montés en série entre eux, un compresseur (17), une vanne (18) d'inversion de cycle, un évaporateur/condenseur (19) couplé thermiquement avec la source chaude en cas de chauffage du local par le deuxième circuit (B), un montage comprenant deux détendeurs (20, 21) montés en parallèle entre eux, et un évaporateur/condenseur (22) couplé thermiquement avec la source froide en cas de chauffage du local par le deuxième circuit (B), un détendeur (20) étant actif en cas de chauffage du local par le deuxième circuit (B) et l'autre détendeur (21) étant actif en cas de rafraîchissement du local par le deuxième circuit (B).

11. Installation selon l'une des revendications 1 à 10, **caractérisée en ce que** la source chaude couplée thermiquement avec un condenseur (13) du premier circuit (A) pour assurer un chauffage du local et/ou la source chaude couplée thermiquement avec un évaporateur/condenseur (19) du deuxième circuit (B) en cas de chauffage du local, est choisie parmi les éléments suivants :
- de l'air provenant du local et à réinjecter dans le local dans le cadre d'un recyclage (6b) d'air,
- un liquide caloporteur alimentant des émetteurs,
- de l'air intérieur au local chauffé et/ou refroidi par des émetteurs (25) à détente directe dans le local.

12. Installation selon l'une des revendications 1 à 11, **caractérisée en ce que** la source froide couplée thermiquement avec un évaporateur (16) du premier circuit (A) pour assurer la production d'eau chaude sanitaire et/ou le chauffage de l'enceinte, et/ou la source froide couplée thermiquement avec un évaporateur/condenseur (22) du deuxième circuit (B) en cas de chauffage du local, est choisie parmi les éléments suivants :
- de l'air extérieur (5b) au local, éventuellement préchauffé,
- un puits canadien (5b),
- un capteur géothermique en fluide frigorigène,
- un circuit 24 indépendant des premier et deuxième circuits thermodynamiques, pour la circulation d'un agent caloporteur.

13. Installation selon l'une des revendications 1 à 12, **caractérisée en ce que** des éléments complémentaires de chauffage d'eau chaude sanitaire, indépendants du premier circuit (A), sont choisis parmi :
- une résistance électrique,
- un échangeur thermique d'appoint,
- des capteurs solaires chauffant un agent caloporteur circulant dans un circuit indépendant des premier et deuxième circuits thermodynamiques (A, B).

14. Procédé de conditionnement thermique d'un local, par chauffage et/ou par rafraîchissement et/ou par ventilation, et de production d'eau chaude sanitaire comprenant une étape de production d'eau chaude sanitaire et/ou de chauffage du local par l'intermédiaire d'un premier circuit thermodynamique (A) couplé thermiquement avec une source froide et au moins une source chaude idoines, et une étape sélectivement de chauffage ou de rafraîchissement du local par l'intermédiaire d'un deuxième circuit thermodynamique (B) couplé thermiquement avec une source froide et une source chaude idoines.

15. Procédé selon la revendication 14, **caractérisé en ce que** durant au moins une période de temps :
- une étape de chauffage du local par le deuxième circuit (B) est mise en oeuvre au moins partiellement en même temps qu'une étape de chauffage du local par le premier circuit (A),
- et/ou une étape de chauffage du local par le deuxième circuit (B) est mise en oeuvre au moins partiellement en même temps qu'une étape de production d'eau chaude sanitaire par le premier circuit (A),
- et/ou une étape de rafraîchissement du local par le deuxième circuit (B) est mise en oeuvre au moins partiellement en même temps qu'une étape de production d'eau chaude sanitaire par le premier circuit (A).

16. Procédé selon l'une des revendications 14 et 15, **caractérisé en ce que** suite à une étape de chauffage du local par le deuxième circuit (B), le procédé comprend une étape de dégivrage d'un évaporateur/condenseur (22) du deuxième circuit (B) préalablement couplé thermiquement avec la source froide durant l'étape de chauffage.

17. Procédé selon l'une des revendications 14 à 16, **caractérisé en ce que** la source chaude couplée thermiquement au deuxième circuit (B) lors d'un rafraîchissement du local par le deuxième circuit (B) étant formée par une même source commune avec la source froide couplée thermiquement au premier circuit (A), le procédé comprend, suite à une étape de chauffage du local et/ou de production d'eau chaude sanitaire par le premier circuit (A), une étape de dégivrage d'un évaporateur (16) du premier circuit (A).

## Patentansprüche

1. Thermische Anlage, die eine thermische Konditionierung eines Raumes durch Heizen und/oder Kühlen und/oder Lüften und eine Erzeugung von sanitärem Warmwasser gewährleistet, wobei die thermische Anlage einen ersten thermodynamischen Kreislauf (A) aufweist, der thermisch mit einer Kältequelle und mindestens einer Wärmequelle gekoppelt ist, die konfiguriert sind, um die Erzeugung von sanitärem Warmwasser zu gewährleisten und/oder um ein Heizen des Raumes zu gewährleisten, **dadurch gekennzeichnet, dass** die Anlage auch einen zweiten thermodynamischen Kreislauf (B) aufweist, der thermisch mit einer Kältequelle und einer Wärmequelle gekoppelt ist, die konfiguriert sind, um selektiv ein Heizen oder ein Kühlen des Raumes zu gewährleisten.

2. Anlage nach Anspruch 1, **dadurch gekennzeichnet, dass** der erste Kreislauf (A) Elemente aufweist, die eine erste nicht umkehrbare Wärmepumpe bilden, und/oder der zweite Kreislauf (B) Elemente aufweist, die eine zweite Wärmepumpe vom umkehrbaren Typ bilden.

3. Anlage nach einem der Ansprüche 1 oder 2, **dadurch gekennzeichnet, dass** der erste Kreislauf (A) eine Anordnung mit zwei Parallelzweigen aufweist, die jeweils mit einem Kondensator (12), der thermisch mit einer Wärmequelle (23) gekoppelt ist, die es ermöglicht, die Erzeugung von sanitärem Warmwasser zu gewährleisten, und mit einem Kondensator (13) ausgestattet sind, der thermisch mit einer anderen Wärmequelle gekoppelt ist, die es ermöglicht, das Heizen des Raumes zu gewährleisten.

4. Anlage nach einem der Ansprüche 1 bis 3, **dadurch gekennzeichnet, dass** sie ein System der kontrollierten mechanischen Lüftung mit doppeltem Luftstrom aufweist, das eine Abluftleitung von dem Raum, eine Zuluftleitung in den Raum und einen Wärmerückgewinnungstauscher (3) aufweist, der eine Wärmeübertragung zwischen der Abluft und der Zuluft gewährleistet.

5. Anlage nach Anspruch 4, **dadurch gekennzeichnet, dass** die Wärmequelle, die thermisch mit einem Kondensator (13) des ersten Kreislaufs (A) gekoppelt ist, um ein Heizen des Raumes zu gewährleisten, und/oder die Wärmequelle, die thermisch mit einem Verdampfer/Kondensator (19) des zweiten Kreislaufs (B) gekoppelt ist, im Fall des Heizens des Raumes durch den zweiten Kreislauf (B) durch einen Teil der Zuluftleitung gebildet ist, der stromabwärts des rekuperativen Wärmetauschers (3) bezüglich der Luftzirkulationsrichtung angeordnet ist, wobei der Teil der Zuluftleitung die Kältequelle bildet, die thermisch mit dem zweiten Kreislauf (B) gekoppelt ist, wenn er ein Kühlen des Raumes gewährleistet.

6. Anlage nach einem der Ansprüche 4 und 5, **dadurch gekennzeichnet, dass** die Kältequelle, die thermisch mit einem Verdampfer (16) des ersten Kreislaufs (A) gekoppelt ist, und/oder die Kältequelle, die thermisch mit einem Verdampfer/Kondensator (22) des zweiten Kreislaufs (B) gekoppelt ist, im Fall des Heizens des Raumes durch den zweiten Kreislauf (B) durch einen Teil der Abluftleitung gebildet ist, der stromabwärts des rekuperativen Wärmetauschers (3) bezüglich der Luftzirkulationsrichtung angeordnet ist, wobei der Teil der Abluftleitung die Wärmequelle bildet, die thermisch mit dem zweiten Kreislauf (B) gekoppelt ist, wenn er ein Kühlen des Raumes gewährleistet.

7. Anlage nach einem der Ansprüche 1 bis 6, **dadurch gekennzeichnet, dass** der Kondensator (13) des ersten Kreislaufs (A), der es ermöglicht, ein Heizen des Raumes zu gewährleisten, und der Verdampfer/Kondensator (19) des zweiten Kreislaufs (B), der im Fall des Heizens des Raumes durch den zweiten Kreislauf (B) thermisch mit der Wärmequelle gekoppelt ist, nebeneinander in einer derartigen Konfiguration angeordnet sind, dass sie alle beide thermisch mit der gleichen gemeinsamen Wärmequelle gekoppelt sind, insbesondere indem durch sie ein zirkulierender gemeinsamer Strom von einer gleichen Flüssigkeit, die diese Wärmequelle bildet, strömt.

8. Anlage nach einem der Ansprüche 1 bis 7, **dadurch gekennzeichnet, dass** der erste Verdampfer (16) des ersten Kreislaufs (A), der thermisch mit der Kältequelle gekoppelt ist, und der Verdampfer/Kondensator (22) des zweiten Kreislaufs (B), der im Fall des Heizens des Raumes durch den zweiten Kreislauf (B) thermisch mit der Kältequelle gekoppelt ist, nebeneinander in einer derartigen Konfiguration angeordnet sind, dass sie alle beide thermisch mit der gleichen gemeinsamen Kältequelle gekoppelt sind, insbesondere indem durch sie ein zirkulierender gemeinsamer Strom von einer gleichen Flüssigkeit, die diese Kältequelle bildet, strömt.

9. Anlage nach einem der Ansprüche 1 bis 8, **dadurch gekennzeichnet, dass** sie ein kompaktes Multifunktionsgerät in Form eines Gehäuses aufweist, in dem der erste und zweite thermodynamische Kreislauf (A, B) ganz oder teilweise aufgenommen sind und das mit Elementen ausgestattet ist, die das Anschließen an Kälte- und Wärmequellen gestatten, die mit dem ersten und zweiten thermodynamischen Kreislauf (A, B) verbunden sind.

10. Anlage nach einem der Ansprüche 1 bis 9, **dadurch gekennzeichnet, dass** der zweite Kreislauf (B) einen Kompressor (17), ein Zyklusumkehrventil (18), einen Verdampfer/Kondensator (19), der im Fall des Heizens des Raumes durch den zweiten Kreislauf (B) thermisch mit der Wärmequelle verbunden ist, eine Anordnung, die zwei Druckminderer (20, 21) aufweist, die parallel zueinander montiert sind, und einen Verdampfer/Kondensator (22), der im Fall des Heizens des Raumes durch den zweiten Kreislauf (B) thermisch mit der Kältequelle verbunden ist, aufweist, die in Serie miteinander montiert sind, wobei ein Druckminderer (20) im Fall des Heizens des Raumes durch den zweiten Kreislauf (B) aktiv ist und der andere Druckminderer (21) im Fall des Kühlens des Raumes durch den zweiten Kreislauf (B) aktiv ist.

11. Anlage nach einem der Ansprüche 1 bis 10, **dadurch gekennzeichnet, dass** die Wärmequelle, die thermisch mit einem Kondensator (13) des ersten Kreislaufs (A) gekoppelt ist, um ein Heizen des Raumes zu gewährleisten, und/oder die Wärmequelle, die im Fall des Heizens des Raumes thermisch mit einem Verdampfer/Kondensator (19) des zweiten Kreislaufs (B) gekoppelt ist, aus den folgenden Elementen ausgewählt ist:
- der Luft, die aus dem Raum kommt und die im Rahmen einer Luftrückführung (6b) in den Raum rückzuführen ist,
- einer Wärmeträgerflüssigkeit, die Strahler versorgt,
- der Luft im Inneren des Raums, die von Strahlern (25) mit Direktverdampfung in dem Raum geheizt und/oder gekühlt wird.

12. Anlage nach einem der Ansprüche 1 bis 11, **dadurch gekennzeichnet, dass** die Kältequelle, die thermisch mit einem Verdampfer (16) des ersten Kreislaufs (A) gekoppelt ist, um die Erzeugung von sanitärem Warmwasser und/oder das Heizen des Behälters zu gewährleisten, und/oder die Kältequelle, die im Fall des Heizens des Raumes thermisch mit einem Verdampfer/Kondensator (22) des zweiten Kreislaufs (B) gekoppelt ist, aus den folgenden Elementen ausgewählt ist:
- der Luft von außerhalb (5b) des Raums, die eventuell vorgewärmt ist,
- einem Erdwärmetauscher (5b),
- einem Erdkollektor mit Kühlflüssigkeit,
- einem Kreislauf 24 für das Zirkulieren eines Wärmeträgers, der von dem ersten und zweiten thermodynamischen Kreislauf unabhängig ist.

13. Anlage nach einem der Ansprüche 1 bis 12, **dadurch gekennzeichnet, dass** zusätzliche Elemente zum Heizen des sanitären Warmwassers, die von dem ersten Kreislauf (A) unabhängig sind, ausgewählt sind aus:
- einem elektrischen Widerstand,
- einem zusätzlichen Wärmetauscher,
- Sonnenkollektoren, die einen Wärmeträger heizen, der in einem Kreislauf zirkuliert, der von dem ersten und zweiten thermodynamischen Kreislauf (A, B) unabhängig ist.

14. Verfahren zur thermischen Konditionierung eines Raumes durch Heizen und/oder Kühlen und/oder Lüften und zur Erzeugung von sanitärem Warmwasser, umfassend einen Schritt des Erzeugens von sanitärem Warmwasser und/oder des Heizens des Raumes durch einen ersten thermodynamischen Kreislauf (A), der thermisch mit einer passenden Kältequelle und mindestens einer passenden Wärmequelle gekoppelt ist, und einen Schritt selektiv des Heizens oder des Kühlens des Raumes durch einen zweiten thermodynamischen Kreislauf (B), der thermisch mit einer geeigneten Kältequelle und einer geeigneten Wärmequelle gekoppelt ist.

15. Verfahren nach Anspruch 14, **dadurch gekennzeichnet, dass** während mindestens einer Zeitdauer:
- ein Schritt des Heizens des Raumes durch den zweiten Kreislauf (B) mindestens teilweise gleichzeitig mit einem Schritt des Heizens des Raumes durch den ersten Kreislauf (A) umgesetzt wird,
- und/oder ein Schritt des Heizens des Raumes durch den zweiten Kreislauf (B) mindestens teilweise gleichzeitig mit einem Schritt des Erzeugens von sanitärem Warmwasser durch den ersten Kreislauf (A) umgesetzt wird,
- und/oder ein Schritt des Kühlens des Raumes durch den zweiten Kreislauf (B) mindestens teilweise gleichzeitig mit einem Schritt des Erzeugens von sanitärem Warmwasser durch den ersten Kreislauf (A) umgesetzt wird.

16. Verfahren nach einem der Ansprüche 14 und 15, **dadurch gekennzeichnet, dass** nach einem Schritt des Heizens des Raumes durch den zweiten Kreislauf (B) das Verfahren einen Schritt des Entfrostens eines Verdampfers/Kondensators (22) des zweiten Kreislaufs (B) aufweist, der zuvor während des Schrittes des Heizens mit der Kältequelle thermisch gekoppelt wird.

17. Verfahren nach einem der Ansprüche 14 bis 16, **dadurch gekennzeichnet, dass**, wobei die Wärmequelle, die mit dem zweiten Kreislauf (B) während eines Kühlens des Raumes durch den zweiten Kreislauf (B) thermisch gekoppelt wird, durch eine gleiche Quelle gebildet wird, die sie mit der Kältequelle, die thermisch mit dem ersten Kreislauf (A) gekoppelt ist, gemeinsam hat, das Verfahren nach einem Schritt des Heizens des Raumes und/oder des Erzeugens von sanitärem Warmwasser durch den ersten Kreislauf (A) einen Schritt des Entfrostens eines Verdampfers (16) des ersten Kreislaufs (A) aufweist.

## Claims

1. Thermal plant providing thermal conditioning of premises, by heating and/or cooling and/or ventilation, and production of domestic hot water, which thermal installation comprises a first thermodynamic circuit (A) thermally coupled to a cold source and at least one hot source which are configured to provide the production of domestic hot water and/or to provide premises heating, **characterized in that** the plant also comprises a second thermodynamic circuit (B) thermally coupled to a cold source and a hot source which are configured to selectively provide heating or cooling of the premises.

2. Plant according to Claim 1, **characterized in that** the first circuit (A) comprises elements that make up an irreversible first heat pump and/or the second circuit (B) comprises elements that make up a second heat pump of reversible type.

3. Plant according to one of Claims 1 and 2, **characterized in that** the first circuit (A) comprises a setup with two parallel legs respectively equipped with a condenser (12) thermally coupled to a hot source (23) allowing the provision of domestic hot water production and with a condenser (13) thermally coupled to another hot source allowing the provision of premises heating.

4. Plant according to one of Claims 1 to 3, **characterized in that** it comprises a dual-flow controlled mechanical ventilation system comprising an extraction pipe extracting air from the premises, a blowing pipe blowing air into the premises and a recuperation heat exchanger (3) transmitting heat between the extracted air and the air blown in.

5. Plant according to Claim 4, **characterized in that** the hot source thermally coupled to a condenser (13) of the first circuit (A) to provide premises heating and/or the hot source thermally coupled to an evaporator/condenser (19) of the second circuit (B) in the event of the premises being heated by the second circuit (B) consists of part of the air blowing pipe which part is positioned downstream of the recuperation exchanger (3), with respect to the direction in which the air circulates, the said part of the blowing pipe constituting the cold source thermally coupled to the second circuit (B) when it is providing cooling of the premises.

6. Plant according to one of Claims 4 and 5, **characterized in that** the cold source thermally coupled to an evaporator (16) of the first circuit (A) and/or the cold source thermally coupled to an evaporator/condenser (22) of the second circuit (B) in the event of the premises being heated by the second circuit (B) consists of part of the air extraction pipe which part is positioned downstream of the recuperation exchanger (3) with respect to the direction in which the air circulates, the said part of the extraction pipe constituting the hot source thermally coupled to the second circuit (B) when it is providing cooling of the premises.

7. Plant according to one of Claims 1 to 6, **characterized in that** the condenser (13) of the first circuit (A) allowing the provision of heating of the premises and the evaporator/condenser (19) of the second circuit (B) thermally coupled to the hot source in the event that the premises are being heated by the second circuit (B) are positioned side by side in a configuration such that they are both thermally coupled to the same hot source they have in common, notably having a circulating common flow of one and the same fluid that makes up this hot source passing through them.

8. Plant according to one of Claims 1 to 7, **characterized in that** the evaporator (16) of the first circuit (A) thermally coupled to the cold source and the evaporator/condenser (22) of the second circuit (B) thermally coupled to the cold source in the event that the premises are being heated by the second circuit (B) are positioned side by side in a configuration such that they are both thermally coupled to the same cold source they have in common, notably having a circulating common flow of one and the same fluid that makes up this cold source passing through them.

9. Plant according to one of Claims 1 to 8, **characterized in that** it comprises a compact multipurpose unit in the form of a casing incorporating all or part of the first and second thermodynamic circuits (A, B) and equipped with elements allowing connection to the cold and hot sources associated with the first and second thermodynamic circuits (A, B).

10. Plant according to one of Claims 1 to 9, **characterized in that** the second circuit (B) comprises, mounted in series between them, a compressor (17), a cycle reversal valve (18), an evaporator/condenser (19) thermally coupled to the hot source in the event that the premises are being heated by the second circuit (B), a setup comprising two expanders (20, 21) mounted in parallel between them, and an evaporator/condenser (22) thermally coupled to the cold source in the event that the premises are being heated by the second circuit (B), one expander (20) being active if the premises are being heated by the second circuit (B) and the other expander (21) being active if the premises are being cooled by the second circuit (B).

11. Plant according to one of Claims 1 to 10, **characterized in that** the hot source thermally coupled to a condenser (13) of the first circuit (A) to provide heating of the premises and/or the hot source thermally coupled to an evaporator/condenser (19) of the second circuit (B) in the event of heating of the premises, is chosen from among the following elements:
- air coming from the premises and that is to be reinjected into the premises in the context of a recycling (6b) of air,
- a coolant feeding emitters,
- air inside the premises which is heated and/or cooled by direct-expansion emitters (25) in the premises.

12. Plant according to one of Claims 1 to 11, **characterized in that** the cold source thermally coupled to an evaporator (16) of the first circuit (A) to provide the production of domestic hot water and/or the heating of the space, and/or the cold source thermally coupled to an evaporator/condenser (22) of the second circuit (B), in the event of heating of the premises, is chosen from the following elements:
- external air (5b) from outside the premises, possibly preheated,
- a Canadian well (5b),
- a refrigerant geothermal sensor,
- a circuit (24) independent of the first and second thermodynamic circuits, for circulating a coolant.

13. Plant according to one of Claims 1 to 12, **characterized in that** complementary elements for heating of domestic hot water, independent of the first circuit (A), are chosen from:
- an electric resistance,
- a top-up heat exchanger,
- solar collectors heating a coolant circulating in a circuit independent of the first and second thermodynamic circuits (A, B).

14. Method for thermally conditioning premises by heating and/or by cooling and/or by ventilation and for producing domestic hot water, comprising a step of producing domestic hot water and/or heating the premises using a first thermodynamic circuit (A) thermally coupled to a suitable cold source and to at least one suitable hot source, and a step of selectively heating or cooling the premises using a second thermodynamic circuit (B) thermally coupled to a suitable cold source and a suitable hot source.

15. Method according to Claim 14, **characterized in that** at least during a period of time:
- a step of heating the premises using the second circuit (B) is carried out at least partially at the same time as a step of heating the premises using the first circuit (A),
- and/or a step of heating the premises using the second circuit (B) is carried out at least partially at the same time as a step of producing domestic hot water using the first circuit (A),
- and/or a step of cooling the premises using the second circuit (B) is carried out at least partially at the same time as a step of producing domestic hot water using the first circuit (A).

16. Method according to one of Claims 14 and 15, **characterized in that** following a step of heating the premises using the second circuit (B), the method comprises a step of de-icing an evaporator/condenser (22) of the second circuit (B) previously thermally coupled to the cold source during the heating step.

17. Method according to one of Claims 14 to 16, **characterized in that**, with the hot source thermally coupled to the second circuit (B) during a cooling of the premises by the second circuit (B) being formed of one and the same source in common with the cold source thermally coupled to the first circuit (A), the method comprises, following a step of heating the premises and/or producing domestic hot water using the first circuit (A), a step of de-icing an evaporator (16) of the first circuit (A).
